# FASCICULE DE BREVET EUROPEEN

(11) **EP 1 791 614 B1**
(45) Date de publication et mention de la délivrance du brevet: **16.11.2011**
(21) Numéro de dépôt: 04787431.8
(22) Date de dépôt: 23.09.2004
(51) Int. Cl.: B01D 29/39

(54) **ELEMENT FILTRANT POUR LIQUIDES ET INSTALLATION DE FILTRATION COMPRENANT UN TEL ELEMENT**
FILTRATIONSELEMENT FÜR FLÜSSIGKEITEN UND FILTRATIONSANLAGE DAMIT
FILTERING ELEMENT FOR LIQUIDS AND FILTERING INSTALLATION COMPRISING SAME

(43) Date de publication de la demande: 06.06.2007
(73) Titulaire: Gaudfrin, Guy, 78860 Saint Nom la Bretèche (FR)
(72) Inventeur: Gaudfrin, Guy, 78860 Saint Nom la Bretèche (FR)
(74) Mandataire: Novagraaf Technologies
(86) Numéro de dépôt international: PCT/FR2004/002405
(87) Numéro de publication internationale: WO 2006/032736

(56) Documents cités:
- EP-A- 0 226 478
- WO-A-90/05035
- GB-A- 811 054
- US-A- 4 790 935

## Description

La présente invention concerne un filtre pour liquides chargés de particules solides et à une installation de filtration comprenant un ou plusieurs filtres de ce type.

Le principe de base de la technique de filtration consiste à faire passer le liquide chargé au travers d'un média filtrant qui retient les particules solides et les séparent ainsi du filtrat.

Le filtre décrit dans le EP 0 226 478 comprend une cuve pourvue d'un orifice d'entrée pour le liquide à filtrer, d'un orifice de sortie pour le filtrat débouchant dans un manifold et d'un orifice d'évacuation pour les boues de particules solides et dans laquelle est enfermée une pluralité d'éléments filtrants.

Chaque élément filtrant est formé de poches allongées en toile de média filtrant qui présentent une ouverture supérieure en communication avec l'orifice de sortie. Ces poches sont montées autour d'armatures pourvues de canaux de drainage longitudinaux et suspendues à des éléments de support logés dans ladite cuve et comprenant notamment une conduite radiale formant collecteur dans laquelle débouche l'ouverture des éléments filtrant.

Le mode de fixation des poches aux éléments de support consiste à plaquer leur bordure supérieure contre le tube collecteur et à les immobiliser au moyen de plaques de maintien et de colliers de serrage.

Cependant, ce mode de fixation n'est pas satisfaisant car lors du montage de la toile il se forme des plis qui sont ensuite le siège de fuites ou d'infiltrations liquides affectant l'étanchéité du dispositif et donc la qualité de la filtration.

En outre, il est nécessaire de prévoir des découpes de la toile aux emplacements des plaques de maintien.

Les armatures décrites sont réalisées sous forme de deux plaques de tôle ondulée qui sont soudées dos à dos en délimitant des canaux de drainage dont la profondeur n'est pas suffisante en particulier lorsque la pression dans la cuve est importante et que la toile se plaque étroitement contre les armatures en se creusant aux emplacements des canaux qu'elle peut aller jusqu'à obturer.

Toujours dans le EP 0 226 478, il est prévu de disposer les éléments filtrant en étoile dans la cuve.

Or, cette disposition n'assure pas un remplissage optimum du volume de la cuve et l'installation de filtration présente donc un encombrement important pour la surface de filtration offerte.

Enfin, la maintenance de l'installation de filtration implique le démontage des éléments filtrants qui est une opération laborieuse du fait que ces éléments sont tous reliés à un manifold qui est fixé sur le pourtour extérieur de la cuve.

Le US 4 790 935 et le GB 811 054 décrivent des poches filtrantes pourvues sur leur bordure d'un ourlet recevant un élément raidisseur et venant se fixer dans une gorge périphérique solidaire des éléments de support des poches.

La présente invention a pour but de proposer un filtre avec des poches de filtration, pour lequel la fixation étanche desdites poches de filtration sur le tube collecteur est améliorée.

Ce but est atteint selon l'invention au moyen d'un filtre selon la revendication 1.

Selon une caractéristique, lesdits éléments de tensionnement et de blocage comprennent un ergot porté par ladite latte et une tige ressort articulée sur lesdits éléments de support et exerçant un appui forcé sur ledit ergot. Selon une autre caractéristique, lesdites armatures sont formées d'une plaque ondulée unique délimitant, de part et d'autre entre ses ondulations, des canaux de drainage et portant en partie supérieure des taquets de suspension.

Selon une variante spécifique, ladite plaque est symétrique par rapport à son axe central et présente, à ses extrémités latérales, un bord perpendiculaire à son plan général.

Selon encore une autre caractéristique, lesdits éléments de support comprennent une nacelle inférieure pourvue de lumières pour la suspension des armatures qui communiquent en partie haute avec la conduite radiale formant collecteur.

Avantageusement, le périmètre intérieur de ladite gorge est au moins égal à celui desdites poches d'un même élément filtrant.

Un autre objet de l'invention est une installation de filtration incorporant un filtre présentant les caractéristiques définies ci-dessus et **caractérisé en ce que** lesdits éléments filtrant sont répartis dans ladite cuve radialement en double-étoile et en deux séries angulairement décalées.

De préférence, le rayon intérieur de la première série en étoile est égal au tiers du rayon intérieur de la cuve tandis que le rayon intérieur de la seconde série en étoile est égal aux deux tiers du rayon intérieur de ladite cuve.

Selon une variante, les collecteurs respectifs des deux séries d'éléments filtrant sont décalés en hauteur dans ladite cuve.

Il est prévu également que les collecteurs respectifs des éléments filtrant adjacents de chacune des deux séries débouchent de façon groupée dans un convergent raccordé au manifold.

Selon une caractéristique spécifique de cette installation, les collecteurs des éléments filtrant sont raccordés à un manifold disposé à l'intérieur et au centre de ladite cuve.

De préférence, l'orifice de sortie du manifold central est situé dans la partie basse de la cuve.

Selon une autre variante, les éléments filtrant et le manifold central sont assemblés de façon à former un ensemble extractible de la cuve.

Selon encore une autre variante adaptable tant à un manifold extérieur à la cuve qu'à un manifold central, les extrémités de sortie des collecteurs sont raccordées de manière étanche et amovible au manifold via des joints d'étanchéité et des éléments de serrage leur appliquant une force radiale élastique.

Le filtre de l'invention présente une étanchéité renforcée entre la toile et le collecteur du fait de l'absence de plis ce qui améliore le rendement et la qualité de la filtration et facilite les opérations de montage et de démontage.

En particulier, le mode de verrouillage de l'ourlet de la toile dans la gorge au moyen d'éléments de tensionnement et de blocage élastiques, permet de compenser les écarts dimensionnels des poches résultant soit de la pression interne soit du vieillissement du matériau.

En outre, à épaisseur globale identique, le nouveau mode de réalisation des armatures en une plaque ondulée unique permet d'obtenir une plus grande rigidité tout en offrant une perte de charge plus faible. L'utilisation désormais possible de plaques plus minces permet un gain de poids et une économie substantielle des coûts de fabrication.

La disposition en double étoile des éléments filtrant permet, par ailleurs, de réduire le volume de la cuve et, combiné à la présence d'un manifold central, d'augmenter la compacité de l'installation tout en optimisant la surface de filtration.

Au surplus, en cas de colmatage, les opérations de maintenance sont facilitées du fait que l'ensemble des éléments filtrant est solidaire du manifold central et peut être extrait de la cuve en une seule opération de levage.

L'invention sera mieux comprise à la lecture de la description qui va suivre en référence aux dessins sur lesquels ;
La figure 1 représente une vue générale en perspective d'un mode de réalisation d'un filtre selon l'invention.
La figure 2 est une vue de détail en écorché partiel du filtre de la figure 1.
Les figures 3, 3A et 3B sont des vues respectivement en coupe verticale partielle et en coupe horizontale selon les plans AA et BB du filtre de la figure 1.
Les figures 4A et 4B sont des vues en coupe respectivement verticale et horizontale selon CC d'une variante de réalisation du filtre de l'invention.

Le filtre représenté sur les figures est destiné à la filtration de liquides chargés de particules solides.

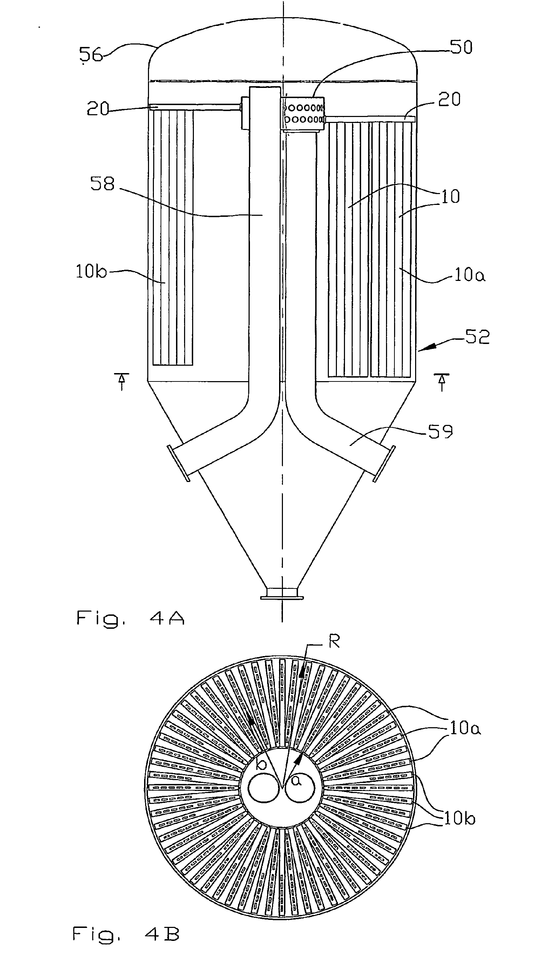

Ce filtre comprend une cuve cylindrique 52 (figures 4A, 4B) pourvue d'un orifice d'entrée pour le liquide à filtrer, d'un orifice de sortie pour le filtrat et d'un orifice d'évacuation pour les boues résiduelles de particules solides.

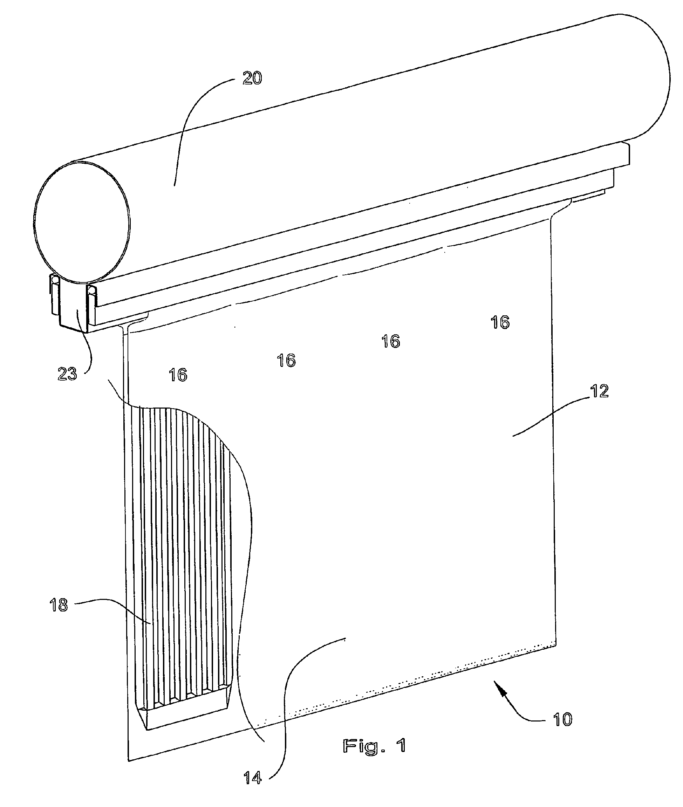

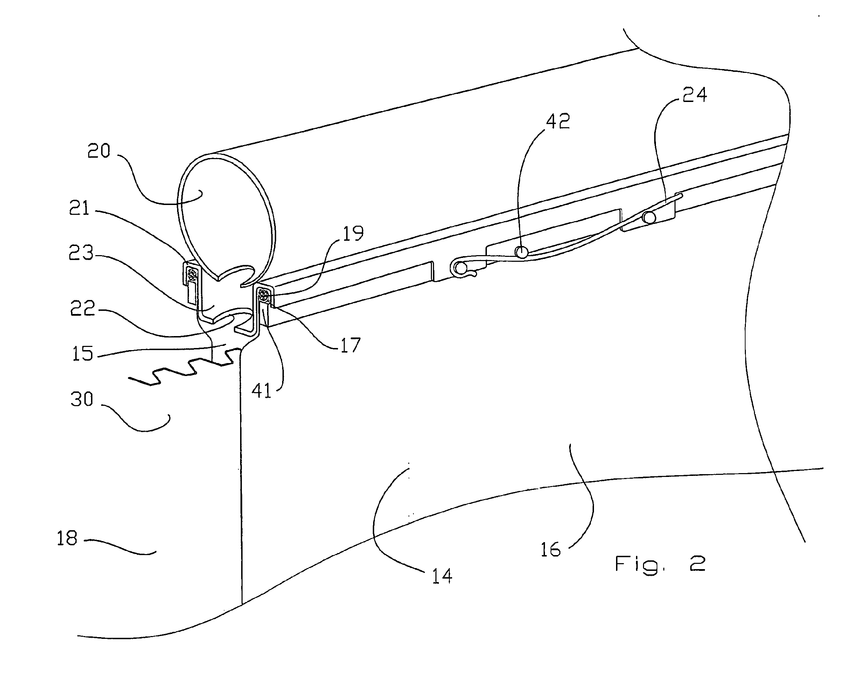

La cuve renferme une pluralité d'éléments filtrant 10 tel que celui représenté notamment sur les figures 1 et 2.

Chaque élément filtrant 10 est formé de poches juxtaposées 16 réalisées au moyen d'une toile de média filtrant 12 avec des coutures verticales 14. Les poches 16 sont allongées et montées autour d'armatures 18 comme décrit dans le EP 0 226 478 en délimitant avec cette dernière des canaux de drainage longitudinaux 30 (figure 2).

Les poches 16 sont fermées à leur extrémité basse et présentent une ouverture supérieure 15 en communication indirecte avec l'orifice de sortie.

Les armatures 18 sont suspendues à des éléments de support logés dans la cuve 52.

Ces éléments de support sont constitués d'une part, d'une conduite radiale 20 et, d'autre part, d'une nacelle inférieure 23 pourvue de lumières 22 pour la suspension des armatures 18. La nacelle 23 dans laquelle débouche l'ouverture des poches 16, communique en partie haute avec la conduite 20 formant collecteur, directement ou, comme dans la variante représentée, via des ouies ménagées dans la paroi inférieure de ladite conduite.

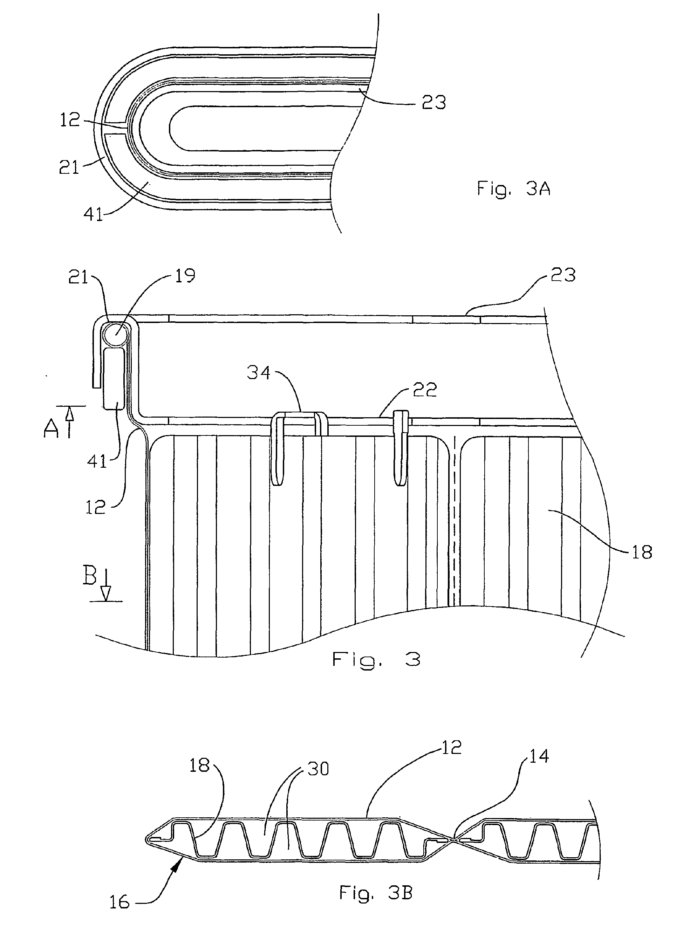

Comme représenté en détail sur la figure 2, la bordure supérieure des poches 16 est pourvue d'un ourlet 17 apte à recevoir un élément raidisseur ici sous forme d'un jonc 19 ici de section ronde, présentant, de préférence une flexibilité longitudinale et une capacité d'écrasement élastique. L'ourlet 17 vient se fixer de manière étanche dans une gorge périphérique d'accrochage 21 solidaire des éléments de support des armatures 18 et qui, dans le mode de réalisation représenté, est portée latéralement par la nacelle 23 (voir figures 2 et 3) en étant réalisé sous forme d'un profilé d'une seule pièce à extrémités cylindriques.

Il serait également possible de réaliser la conduite 20, la nacelle 23 et la gorge 21 à partir d'un profilé unique.

Le filtre de l'invention comprend en outre des moyens de verrouillage de l'ourlet 17. Ces moyens comprennent un élément d'appui forcé de l'ourlet 17 dans la gorge 21 sous forme, par exemple, d'une tige ressort 24 articulée ici sur la nacelle 23, coopérant avec un élément de prise de l'élément raidisseur.

Dans le mode de réalisation représenté, l'élément de prise est un ergot 42 porté par une latte de serrage rapportée 41 venant en appui dans la gorge 21, vers le haut contre le jonc 19 et, latéralement, contre la toile 12 et la paroi extérieure de la nacelle 23 des éléments de support.

La latte de serrage 41 épouse le profil de la gorge 21 tant en section qu'en contours comme cela est apparent sur les figures 3 et 3A.

Selon une variante non représentée, l'élément de prise est constitué d'une dent ou d'un crochet venant s'engager sous le bord inférieur de la latte 41. Le périmètre intérieur de la gorge 21 est au moins égal à celui des poches 16 d'un même élément filtrant 10.

Cette disposition qui est apparente sur les figures 3A et 3B, permet d'éviter la formation de plis entre la paroi externe de la nacelle 23 et la latte de serrage 41 qui sont susceptibles d'apparaître du fait du rétrécissement de la toile en largeur lors de l'introduction des armatures 18 dans les poches 16.

Les armatures 18 sont formées, selon l'invention, d'une plaque ondulée unique en métal ou en matière plastique rigide délimitant, de part et d'autre et entre ses ondulations, les canaux de drainage 30. Ces canaux peuvent, le cas échéant, être équipés d'opercules (non représentés) pour imposer un sens de circulation du liquide entre l'armature et la poche. Cette plaque est symétrique par rapport à son axe central et porte en partie supérieure des taquets de suspension 34 engagés dans les lumières 22 de la nacelle 23.

Les ondulations situées aux extrémités latérales de la plaque d'armature présente un bord extérieur perpendiculaire au plan général de la plaque de façon à ménager un meilleur passage pour les filtrats comme représenté sur la figure 3B.

Les figures 4A et 4B représentent une installation de filtration équipée du filtre de l'invention dont un mode de réalisation a été décrit précédemment.

Dans cette installation, les éléments filtrant 10 sont répartis à l'intérieur de la cuve 52 selon une disposition radiale en double étoile et en deux séries angulairement décalées 10a,10b.

Comme représenté sur la figure 4B en vue de dessus, le rayon intérieur a de la première série 10a d'éléments filtrant est égal au tiers du rayon intérieur R de la cuve 52 tandis que le rayon intérieur b de la seconde série 10b est égal aux deux tiers du rayon R de ladite cuve.

Cette répartition libère, à l'intérieur de la cuve, un espace cylindrique central dont le diamètre est égal au tiers du diamètre de la cuve et dans lequel est disposé un manifold 58 de récupération du filtrat dans lequel débouchent les collecteurs 20.

La première série 10a d'éléments filtrant est constituée de deux unités juxtaposées et coplanaires tandis que la seconde série 10b est constituée d'une seule unité de filtre.

Ainsi, on trouve alternativement dans la cuve, un filtre de la première série 10a puis un filtre de la seconde série 10b.

Dans le mode de réalisation de la figure 4A, le manifold 58 comporte, en partie amont, un boîtier de raccordement 50 alimenté par les collecteurs 20 des deux séries 10a, 10b d'éléments filtrant 10.

Le boîtier 50 présente deux rangées étagées d'orifices de raccordement.

La rangée inférieure reçoit les embouts d'extrémité des collecteurs de la première série 10a qui est décalée en hauteur dans la cuve par rapport aux collecteurs de la seconde série 10b.

L'orifice de sortie 59 du manifold 58 est situé dans la partie basse de la cuve 52.

Les éléments filtrant 10 et le manifold 58 sont assemblés de façon à former un ensemble extractible de préférence par le haut de la cuve 52 après dégagement du capot 56.

Les extrémités de sortie des collecteurs 20 sont raccordées de manière étanche et amovible au manifold 58 via des joints d'étanchéité et des éléments de serrage permettant de leur appliquer une force radiale élastique et sans provoquer d'écrasement.

Dans un mode de réalisation avec un manifold extérieur, il est prévu que les collecteurs 20 respectifs des éléments filtrant 10 adjacents de chacune des séries 10a, 10b débouchent de façon groupée dans un convergent (non représenté) raccordé au manifold périphérique 58.

## Revendications

1. Filtre pour liquides chargés de particules solides, comprenant une cuve (52) pourvue d'un orifice d'entrée pour le liquide à filtrer, d'un orifice de sortie pour le filtrat débouchant dans un manifold et d'un orifice d'évacuation pour les boues de particules solides et dans laquelle est enfermée une pluralité d'éléments filtrants (10), chaque élément filtrant étant formé de poches allongées (16) en toile (12) de média filtrant qui présentent une ouverture supérieure (19) en communication avec l'orifice de sortie et qui sont montées autour d'armatures (18) pourvues de canaux de drainage longitudinaux (30) et suspendues à des éléments de support logés dans ladite cuve et comprenant une conduite radiale (20) formant collecteur dans laquelle débouche l'ouverture des éléments filtrant, la bordure supérieure desdites poches étant pourvue d'un ourlet (17) recevant un élément raidisseur (19) et venant se fixer de manière étanche dans une gorge périphérique d'accrochage (21) solidaire desdits éléments de support **caractérisé en ce que** le filtre est équipé de moyens de verrouillage de l'ourlet (17) desdites poches (16) dans ladite gorge (21) comprenant des éléments de tensionnement et de blocage élastiques constitués d'une latte de serrage (41) rapportée épousant le profil de la gorge (21) à l'intérieur de laquelle elle est en appui longitudinalement, vers le haut, contre l'élément raidisseur (19) et, latéralement par l'extérieur, contre la toile (12) et les éléments de support.

2. Filtre selon la revendication 1 **caractérisé en ce que** lesdits éléments de tensionnement et de blocage comprennent en outre un ergot (42) porté par ladite latte de serrage (41) et une tige ressort (24) articulée sur lesdits éléments de support et exerçant un appui forcé sur ledit ergot.

3. Filtre selon l'une des revendications précédentes **caractérisé en ce que** lesdites armatures (18) sont formées d'une plaque ondulée unique délimitant, de part et d'autre entre ses ondulations, des canaux de drainage (30) et portant en partie supérieure des taquets de suspension (34).

4. Filtre selon la revendication 3 **caractérisé en ce que** ladite plaque est symétrique par rapport à son axe central et présente, à ses extrémités latérales, un bord perpendiculaire à son plan général.

5. Filtre selon l'une des revendications précédentes **caractérisé en ce que** lesdits éléments de support comprennent une nacelle inférieure (23) pourvue de lumières (22) pour la suspension des armatures (18) qui communiquent en partie haute avec la conduite radiale (20) formant collecteur.

6. Filtre selon l'une des revendications précédentes **caractérisé en ce que** le périmètre intérieur de ladite gorge (21) est au moins égal à celui desdites poches (16) d'un même élément filtrant (10).

7. Installation de filtration incorporant un filtre selon l'une des revendications précédentes **caractérisée en ce que** lesdits éléments filtrant (10) sont répartis dans ladite cuve (52) radialement en double-étoile et en deux séries (10a, 10b) angulairement décalées.

8. Installation de filtration selon la revendication 7 **caractérisée en ce que** le rayon intérieur (a) de la première série (10a) en étoile est égal au tiers du rayon intérieur (R) de la cuve (52) tandis que le rayon intérieur (b) de la seconde série (10b) en étoile est égal aux deux tiers du rayon intérieur (R) de ladite cuve.

9. Installation selon la revendication 7 ou 8 **caractérisée en ce que** les collecteurs (20) respectifs des deux séries (10a, 10b) d'éléments filtrant (10) sont décalés en hauteur dans ladite cuve (52).

10. Installation selon l'une des revendications 7 à 9 **caractérisée en ce que** les collecteurs (20) respectifs des éléments filtrant (10) adjacents de chacune des séries (10a, 10b) débouchent de façon groupée dans un convergent raccordé au manifold (58).

11. Installation de filtration selon l'une des revendications 7 à 10 **caractérisée en ce que** ledit manifold (58) disposé à l'intérieur et au centre de ladite cuve.

12. Installation de filtration selon la revendication 11 **caractérisee en ce que** l'orifice de sortie (59) du manifold central (58) est situé dans la partie basse de la cuve (52).

13. Installation de filtration selon l'une des revendications 11 ou 12 **caractérisee en ce que** les éléments filtrant (in) et le manifold central (58) sont asemblés de façon à former un ensemble extractible de la cuve.

14. Installation de filtration selon l'une des revendications 11 à 13 **caractérisée en ce que** les extrémités de sortie des collecteurs sont raccordées de manière étanche et amovible au manifold (58) via des joints d'étanchéité et des éléments de serrage leur appliquant une force radiale élastique.

## Claims

1. Filter for liquids loaded with solid particles, comprising a vessel (52) provided with an inlet for the liquid to be filtered, an outlet for the filtrate emerging into a manifold and a discharge orifice for the sludge of solid particles and wherein is enclosed a plurality of filtering elements (10), each filtering element shaped like an elongated pocket (16) of fabric (12) of filtering media having an upper opening (19) in communication with the outlet and mounted around frames (18) provided with longitudinal drainage channels (30) and suspended to support elements housed in said vessel and comprising a radial pipe (20) forming a manifold wherein emerges the opening of the filtering elements, the upper edge of said pockets being provided with a hem (17) receiving a stiffening element (19) and urged to be fixed in a watertight manner in a peripheral catching groove (21) integral with said support elements **characterised in that** the filter is provided with means of locking the hem (17) of said pockets (16) in said groove (21) comprising tensioning and elastic blocking elements constituted of an added clamping strip (41) hugging the profile of the groove (21) inside of which it pushes against longitudinally, upwards, against the stiffening element (19) and, laterally via the exterior, against the fabric (12) and the support elements.

2. Filter according to claim 1 **characterised in that** said tensioning and blocking elements further include a lug (42) carried by said clamping strip (41) and spring rod (24) articulated on said support elements and exerting a forced pressing on said lug.

3. Filter according to one of the preceding claims **characterised in that** said frames (18) are formed from a single rippled plate delimiting, on either side of its ripples, drainage channels (30) and carrying in the upper part holding tabs (34).

4. Filter according to claim 3 **characterised in that** said plate is symmetrical in relation to its central axis and has, at its lateral ends, an edge perpendicular to its general plane.

5. Filter according to one of the preceding claims **characterised in that** said support elements include a lower nacelle (23) provided with holes (22) for the suspension of the frames (18) which communicate in the upper portion with the radial pipe (20) forming a manifold.

6. Filter according to one of the preceding claims **characterised in that** the interior perimeter of said gorge (21) is at least equal to that of said pockets (16) of the same filtering element (10).

7. Filtering installation incorporating a filter according to one of the preceding claims **characterised in that** said filtering elements (10) are distributed in said vessel (52) radially as a double-star and in two series (10a, 10b) that are angularly offset.

8. Filtering installation according to claim 7 **characterised in that** the inner radius (a) of the first series (10a) in a star is equal to one-third of the inner radius (R) of the vessel (52) while the inner radius (b) of the second series (10b) in a star is equal to two-thirds of the inner radius (R) of said vessel.

9. Installation according to one of claims 7 or 8, **characterised in that** the respective manifolds (20) of the two series (10a, 10b) of filtering elements (10) are offset in height in said vessel (52).

10. Installation according to one of claims 7 to 9, **characterised in that** the respective manifolds (20) of the adjacent filtering elements (10) of each of the series (10a, 10b) emerge in a grouped manner into a convergent connected to the manifold (58).

11. Filtering installation according to one of claims 7 to 10 **characterised in that** said manifold (58) arranged inside and at the centre of said vessel.

12. Filtering installation according to claim 11 **characterised in that** the outlet (59) of the central manifold (58) is located in the lower portion of the vessel (52).

13. Filtering installation according to one of claims 11 or 12 **characterised in that** the filtering elements (10) and the manifold central (58) are assembled in such a way as to form a unit that can be extracted from the vessel.

14. Filtering installation according to one of claims 11 to 13, **characterised in that** the outlet ends of the manifolds are connected in a watertight manner and in a removable manner to the manifold (58) via sealing joints and clamping elements applying to them a radial elastic force.

## Patentansprüche

1. Filter für Flüssigkeiten, die mit festen Partikeln geladen sind, umfassend eine Wanne (52), die mit einer Einlassöffnung für die zu filternde Flüssigkeit, mit einer Auslassöffnung für das Filtrat, das in einen Verteiler mündet, und einer Austrittsöffnung für den Schlamm aus festen Partikeln versehen ist, und in der eine Vielzahl von Filterelementen (10) eingeschlossen ist, wobei jedes Filterelement aus verlängerten Taschen (16) aus Gewebe (12) eines Filtermediums gebildet ist, die eine obere Öffnung (19) in Verbindung mit der Auslassöffnung aufweisen, und die um Armierungen (18) montiert sind, die mit Längs-Entwässerungskanälen (30) versehen und an Stützelementen aufgehängt sind, die in der besagten Wanne gelagert sind und einen radialen Kanal (20) aufweisen, der einen Kollektor bildet, in den die Öffnung der besagten Filterelemente mündet, wobei die obere Einfassung der Taschen mit einem Saum (17) versehen ist, der ein Versteifungselement (19) aufnimmt und auf dichte Weise in einer peripheren Befestigungsrille (21) befestigt wird, die mit den Stützelementen fest verbunden ist, **dadurch gekennzeichnet, dass** der Filter mit Mitteln zur Verriegelung des Saums (17) der besagten Beutel (16) in der besagten Rille (21) ausgestattet ist, umfassend elastische Spannungs- und Blockierelemente, die aus einer aufmontierten Klemmlatte (41) bestehen, die sich um das Profil der Rille (21) legt, in deren Inneren sie in Längsrichtung, nach oben gegen das Versteifungselement (19) und seitlich auf der Außenseite gegen das Gewebe (12) und die Stützelemente gelagert ist.

2. Filter nach Anspruch 1, **dadurch gekennzeichnet, dass** die besagten Spann- und Blockierelemente außerdem einen Vorsprung (42) umfassen, der von der besagten Klemmlatte (41) getragen wird, und einen Federstab (24), der auf den besagten Stützelementen gelenkig angebracht ist und auf den besagten Vorsprung eine starke Kraft ausübt.

3. Filter nach einem der vorhergehenden Ansprüche, **dadurch gekennzeichnet dass** die besagten Armierungen (18) aus einer einzigen gewellten Platte gebildet sind, die auf beiden Seiten ihrer Wellungen Entwässerungskanäle (30) begrenzt und im oberen Teil Aufhängepflöcke (34) trägt.

4. Filter nach Anspruch 3, **dadurch gekennzeichnet, dass** die besagte Platte bezüglich ihrer Mittelachse symmetrisch ist und an ihren seitlichen Enden einen Rand aufweist, der senkrecht zu ihrer Hauptebene ist.

5. Filter nach einem der vorhergehenden Ansprüche, **dadurch gekennzeichnet dass** die besagten Stützelemente eine untere Gondel (23) umfassen, die mit Öffnungen (22) zur Aufhängung der Armierungen (18) versehen ist, die im oberen Teil mit dem radialen Kanal (20) verbunden sind, der den Kollektor bildet.

6. Filter nach einem der vorhergehenden Ansprüche, **dadurch gekennzeichnet dass** der innere Umfang der besagten Rille (21) mindestens gleich demjenigen der besagten Taschen (16) eines gleichen Filterelements (10) ist.

7. Filteranlage, umfassend einen Filter nach einem der vorhergehenden Ansprüche, **dadurch gekennzeichnet, dass** die besagten Filterelemente (10) in der besagten Wanne (52) radial in Form eines doppelten Sterns und in zwei Reihen (10a, 10b), die winklig versetzt sind, verteilt sind.

8. Filteranlage nach Anspruch 7, **dadurch gekennzeichnet, dass** der innere Radius (a) der ersten sternförmigen Reihe (10a) gleich einem Drittel des inneren Radius (R) der Wanne (52) ist, während der innere Radius (b) der zweiten sternförmigen Reihe (10b) gleich zwei Dritteln des inneren Radius (R) der Wanne ist.

9. Anlage nach Anspruch 7 oder 8, **dadurch gekennzeichnet, dass** die entsprechenden Kollektoren (20) der zwei Reihen (10a, 10b) von Filterelementen (10) in der Höhe in der besagten Wanne (52) versetzt sind.

10. Anlage nach einem der Ansprüche 7 bis 9, **dadurch gekennzeichnet, dass** die entsprechenden Kollektoren (20) der benachbarten Filterelemente (10) jeder der Reihen (10a, 10b) gruppiert in einem Einlauf Punkt, der mit dem Verteiler (58) verbunden ist, münden.

11. Filteranlage nach einem der Ansprüche 7 bis 10, **dadurch gekennzeichnet, dass** der Verteiler (58) im Innern und in der Mitte der Wanne angeordnet ist.

12. Filteranlage nach Anspruch 11, **dadurch gekennzeichnet, dass** sich die Auslassöffnung (59) des zentralen Verteilers (58) im unteren Teil der Wanne (52) befindet.

13. Filteranlage nach einem der Ansprüche 11 oder 12, **dadurch gekennzeichnet, dass** die Filterelemente (10) und der zentrale Verteiler (58) so montiert sind, dass sie eine extrahierbare Gruppe der Wanne bilden.

14. Filteranlage nach einem der Ansprüche 11 bis 13, **dadurch gekennzeichnet, dass** die Auslassenden der Kollektoren auf dichte und lösbare Weise mit dem Verteiler (58) über Dichtungen und Klemmelemente verbunden sind, die eine elastische radiale Kraft auf sie ausüben.
